# FASCICULE DE BREVET EUROPEEN

(11) **EP 1 086 321 B1**
(45) Date de publication et mention de la délivrance du brevet: **04.12.2002**
(21) Numéro de dépôt: 99927767.6
(22) Date de dépôt: 26.05.1999
(51) Int. Cl.: F16F 1/32, F16F 1/02

(54) **RONDELLE A ELASTICITE BIDIRECTIONNELLE**
BIDIREKTIONAL ELASTISCHE SCHEIBE
WASHER WITH BIDIRECTIONAL ELASTICITY

(30) Priorité: 11.06.1998 IT TO980508
(43) Date de publication de la demande: 28.03.2001
(73) Titulaire: ROBERT BOSCH SISTEMI FRENANTI S.p.A., 26013 Crema (IT)
(72) Inventeur: TRISTANO, Nicola, I-75100 Matera (IT); SAPORITI, Roberto, I-80141 Napoli (IT); PATANO, Pietro, I-70027 Palo del Colle (IT); HULLIGER, Claude, F-60520 Thiers sur Thève (FR)
(74) Mandataire: Hurwic, Aleksander Wiktor
(86) Numéro de dépôt international: EP9903643
(87) Numéro de publication internationale: WO99064763

(56) Documents cités:
- EP-A- 0 795 696
- US-A- 3 858 698
- US-A- 5 415 272
- US-A- 5 639 074

## Description

La présente invention concerne une rondelle élastique de forme sensiblement annulaire, présentant un axe de révolution, un rayon déterminé et une épaisseur déterminée de matière, et s'inscrivant au repos dans un cylindre de même axe, de rayon égal au rayon déterminé et d'encombrement axial supérieur à l'épaisseur déterminée, cette rondelle étant destinée à exercer une force élastique orientée suivant son axe de révolution.

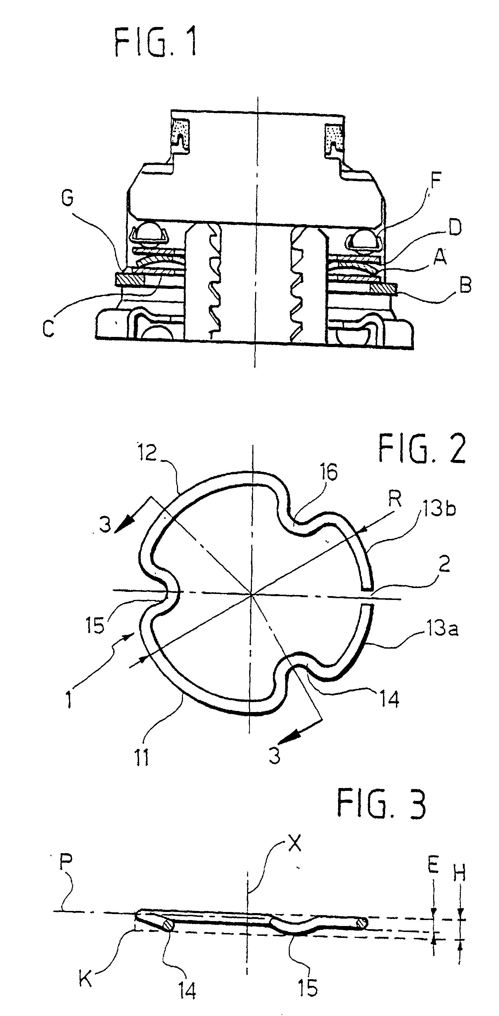

Les rondelles de ce type sont bien connues dans l'art antérieur, tel qu'illustré par exemple à la figure 1, pour rattraper le jeu d'un empilage de pièces et/ou pour appliquer à un tel empilage une certaine contrainte élastique axiale.

Dans l'art antérieur, les rondelles de ce type, telles que celle repérée par la référence A sur la figure 1, sont formées d'un anneau gauchi dont le maintien requiert le montage d'une rondelle élastique fendue B dans une gorge G, la mise en place d'une première rondelle plane C s'appuyant sur la rondelle fendue B, et la mise en place d'une seconde rondelle plane D, la rondelle élastique A étant enserrée entre les deux rondelles planes C et D.

Or, non seulement cet agencement exige le recours à un nombre de pièces relativement élevé, mais il rend de surcroît la valeur de l'effort élastique axial exercé par la rondelle élastique A très dépendante de la tolérance de fabrication des différentes rondelles empilées.

L'invention se situe dans ce contexte et a pour but d'éliminer les inconvénients précités.

A cette fin, la rondelle de l'invention, par ailleurs conforme à la définition qu'en donne le préambule ci-dessus, est essentiellement caractérisée en ce qu'elle est principalement constituée par un jonc enroulé formant un anneau interrompu par un intervalle libre, en ce que cet anneau est radialement et élastiquement rétractile sous contrainte, en ce qu'au moins deux premières sections du jonc, disposées de part et d'autre de l'intervalle libre, s'étendent dans un même plan moyen, et en ce qu'au moins deux secondes sections du jonc, disposées de part et d'autre de l'intervalle libre, s'écartent du plan moyen des premières sections.

Grâce à ces caractéristiques, la rondelle de l'invention peut ainsi être directement engagée dans une gorge périphérique telle que la gorge G de la figure 1 pour remplacer l'ensemble des rondelles A, B, et C, ce qui réduit le coût total des pièces utilisées, leur temps de montage, et la dispersion des efforts axiaux exercés sur les pièces à contraindre, en l'occurrence la rondelle D et la butée à billes F sur l'exemple de la figure 1.

Dans un mode de réalisation préféré de l'invention, le jonc, qui peut être de section circulaire, est replié sur lui-même dans le plan moyen, de part et d'autre de l'intervalle libre, pour offrir deux boucles de préhension permettant de saisir la rondelle tout en la soumettant à une rétraction radiale par pincement et rapprochement de ces boucles de préhension.

En outre, les secondes sections sont par exemple conformées en boucles pour s'étendre de part et d'autre du plan moyen et perpendiculairement à lui.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue en coupe d'un mécanisme utilisant une rondelle connue;
- la Figure 2 est une vue en plan d'une rondelle conforme a un premier mode de réalisation de l'invention;
- la Figure 3 est une vue en coupe de la rondelle de la figure 2, effectuée suivant les flèches 3-3 de la figure 2;
- la Figure 4 est une vue en plan d'une rondelle conforme à un second mode de réalisation de l'invention;
- la Figure 5 est une vue en coupe de la rondelle de la figure 4, effectuée suivant les flèches 5-5 de la figure 4;
- la Figure 6 est une vue en coupe de la rondelle de la figure 4, effectuée suivant les flèches 6-6 de la figure 4; et
- la Figure 7 est une vue en perspective de la rondelle de la figure 4.

L'invention concerne une rondelle élastique du type de celles qui, au repos, c'est-à-dire en l'absence de contrainte, présentent une forme sensiblement annulaire, un axe X de révolution, un rayon R déterminé et une épaisseur E déterminée de matière, et qui s'inscrivent dans un cylindre K de même axe X, de rayon égal au rayon déterminé R et d'encombrement axial H supérieur à l'épaisseur E déterminée, une telle rondelle ayant pour fonction d'exercer une force élastique orientée suivant son axe X de révolution.

Selon l'invention, cette rondelle est essentiellement constituée par un jonc élastique 1, par exemple un fil ressort métallique de section circulaire du type corde à piano, enroulé pour former un anneau interrompu par un intervalle libre 2.

Grâce à l'élasticité du matériau utilisé et à la présence de l'intervalle libre 2, le rayon R de cet anneau peut être réduit, par déformation élastique de l'anneau, en appliquant à cet anneau une contrainte propre à le refermer sur lui-même en comblant l'intervalle libre 2.

Le jonc 1 présente plusieurs sections de montage, telles que 11, 12, 13a, et 13b, qui sont disposées de part et d'autre de l'intervalle libre 2, qui s'étendent dans un même plan moyen P, et par lesquelles la rondelle de l'invention peut venir se loger dans une gorge telle que la gorge G de la figure 1.

Le jonc 1 présente en outre plusieurs sections d'appui, telles que 14, 15, et 16, qui sont disposées de part et d'autre de l'intervalle libre 2, qui s'écartent du plan moyen P des sections de montage 11, 12, 13a, 13b, et grâce auxquelles la rondelle de l'invention peut appliquer une force élastique axiale sur une pièce telle que la rondelle D de la figure 1.

Comme le montrent les figures 2 et 3, la rondelle de l'invention peut présenter une symétrie axiale d'ordre 3 ou plus, les sections d'appui 14, 15, et 16 étant toutes disposées d'un même côté du plan moyen P et ayant une forme radialement rentrante permettant la préhension de la rondelle par pincement de deux sections d'appui telles que 14 et 16.

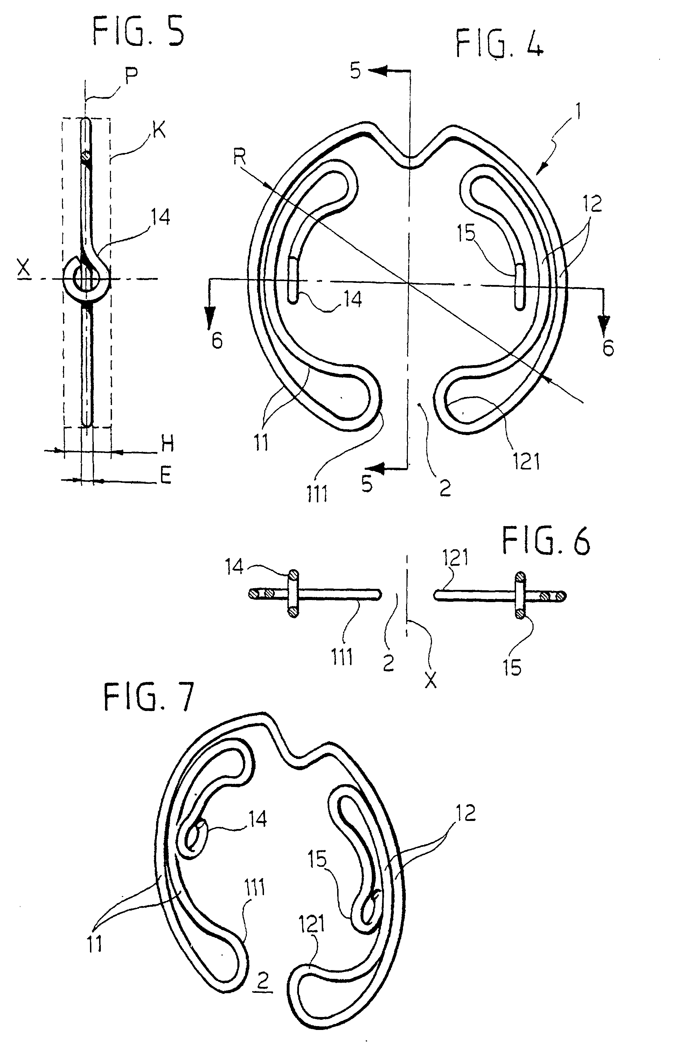

Cependant, la rondelle de l'invention peut aussi, comme le montrent les figures 4 à 7, présenter un plan de symétrie et être obtenue en repliant le jonc 1 sur lui-même dans le plan moyen P, de part et d'autre de l'intervalle libre 2, pour former deux boucles de préhension 111, 121 dont le pincement permet de saisir la rondelle tout en la soumettant à une rétraction radiale.

Dans ce second mode de réalisation, les sections d'appui 14, 15 prennent par exemple la forme de boucles qui s'étendent de part et d'autre du plan moyen P et perpendiculairement à ce plan.

Grâce à sa configuration symétrique, la rondelle conforme à ce second mode de réalisation de l'invention peut donc être montée indifféremment dans un sens ou dans l'autre.

## Revendications

1. Rondelle élastique de forme sensiblement annulaire, présentant un axe (X) de révolution, un rayon (R) déterminé et une épaisseur (E) déterminée de matière, et s'inscrivant au repos dans un cylindre de même axe (X), de rayon égal au rayon déterminé (R) et d'encombrement axial (H) supérieur à l'épaisseur (E) déterminée, cette rondelle étant destinée à exercer une force élastique orientée suivant son axe (X) de révolution, **caractérisée en ce qu'**elle est essentiellement constituée par un jonc (1) enroulé formant un anneau interrompu par un intervalle libre (2), **en ce que** cet anneau est radialement et élastiquement rétractile sous contrainte, **en ce qu'**au moins deux premières sections (11, 12, 13a, 13b) du jonc, disposées de part et d'autre de l'intervalle libre (2), s'étendent dans un même plan moyen (P), et **en ce qu'**au moins deux secondes sections (14, 15, 16) du jonc, disposées de part et d'autre de l'intervalle libre (2), s'écartent du plan moyen (P) des premières sections (11, 12, 13a, 13b).

2. Rondelle élastique suivant la revendication 1, **caractérisée en ce que** le jonc (1) est replié sur lui-même dans le plan moyen (P), de part et d'autre de l'intervalle libre (2), pour offrir deux boucles de préhension (111, 121) permettant de saisir la rondelle tout en la soumettant à une rétraction radiale.

3. Rondelle élastique suivant la revendication 1 ou 2, **caractérisée en ce que** les secondes sections (14, 15) sont conformées en boucles et s'étendent de part et d'autre du plan moyen (P).

4. Rondelle élastique suivant l'une quelconque des revendications précédentes, **caractérisée en ce que** le jonc (1) présente une section circulaire.

## Patentansprüche

1. Elastische Scheibe mit einer im wesentlichen ringförmigen Form, welche eine Rotationsachse (X), einen bestimmten Radius (R) und eine bestimmte Materialdicke (E) aufweist, und sich in der Ruhestellung in einen Zylinder mit derselben Achse (X), mit einem Radius, der gleich dem bestimmten Radius (R) ist, und mit einem axialen Platzbedarf (H), der höher ist als die bestimmte Dicke (E), einbeschreibt, wobei diese Scheibe dazu vorgesehen ist, eine elastische Kraft auszuüben, die entlang ihrer Rotationsachse (X) orientiert ist, **dadurch gekennzeichnet, daß** sie im wesentlichen aus einer zusammengerollten Stange (1) besteht, die einen Ring bildet, der durch einen freien Abstand (2) unterbrochen ist, daß dieser Ring radial und elastisch unter Spannung einziehbar ist, daß mindestens zwei erste Abschnitte (11, 12, 13a, 13b) der Stange, die auf der einen und der anderen Seite des freien Abstands (2) angeordnet sind, sich in ein und derselben Mittelebene (P) erstrecken, und daß mindestens zwei zweite Abschnitte (14, 15, 16) der Stange, die auf der einen und der anderen Seite des freien Abstands (2) angeordnet sind, sich von der Mittelebene (P) der ersten Abschnitte (11, 12, 13a, 13b) entfernen.

2. Elastische Scheibe nach Anspruch 1, **dadurch gekennzeichnet, daß** die Stange (1) in der Mittelebene (P) auf beiden Seiten des freien Abstands (2) auf sich selbst zurückgebogen ist, um zwei Griffschleifen (111, 121) zu bieten, die es ermöglichen, die Scheibe zu greifen, während sie einem radialen Einziehen unterzogen wird.

3. Elastische Scheibe nach Anspruch 1 oder 2, **dadurch gekennzeichnet, daß** die zweiten Abschnitte (14, 15) in Schleifen ausgebildet sind und sich der einen und der anderen Seite der Mittelebene (P) erstrecken.

4. Elastische Scheibe nach einem der vorangehenden Ansprüche, **dadurch gekennzeichnet, daß** die Stange (1) einen kreisförmigen Querschnitt aufweist.

## Claims

1. Elastic washer of approximately annular shape, having an axis (X) of revolution, a given radius (R) and a given thickness (E) of material, and being inscribed, in the relaxed state, inside a cylinder of the same axis (X), of radius equal to the given radius (R) and of axial size (H) greater than the given thickness (E), this washer being intended to exert an elastic force directed along its axis (X) of revolution, **characterized in that** it essentially consists of a wound strip (1) forming a ring interrupted by a gap (2), **in that** this ring can retract radially and elastically under stress, **in that** at least two first sections (11, 12, 13a, 13b) of the strip, which lie one on each side of the gap (2), extend in the same mean plane (P), and **in that** at least two second sections (14, 15, 16) of the strip, which lie on each side of the gap (2), diverge from the mean plane (P) of the first sections (11, 12, 13a, 13b).

2. Elastic washer according to Claim 1, **characterized in that** the strip (1) is bent on itself in the mean plane (P), on each side of the gap (2), in order to offer two loops (111, 121) for holding purposes, allowing the washer to be grasped while at the same time subjecting it to radial contraction.

3. Elastic washer according to Claim 1 or 2, **characterized in that** the second sections (14, 15) are shaped into loops and extend on each side of the mean plane (P).

4. Elastic washer according to any one of the preceding claims, **characterized in that** the strip (1) is of circular section.
